# FASCICULE DE BREVET EUROPEEN

(11) **EP 2 024 221 B1**
(45) Date de publication et mention de la délivrance du brevet: **12.04.2017**
(21) Numéro de dépôt: 07788966.5
(22) Date de dépôt: 06.06.2007
(51) Int. Cl.: B62D 5/04, B62D 5/065

(54) **PROCEDE DE COMMANDE DE L'ALIMENTATION ELECTRIQUE D'UN MOTEUR ENTRAINANT UNE POMPE HYDRAULIQUE DE DIRECTION ASSISTEE DE VEHICULE AUTOMOBILE**
STEUERUNGSVERFAHREN DER STROMVERSORGUNG EINES MOTORS EINER PUMPE BEI EINER HYDRAULISCHEN FAHRZEUGLENKHILFE
CONTROL APPARATUS OF ELECTRICAL SUPPLY, WITH A MOTOR INCLUDING A POWER-ASSISTED HYDRAULIC PUMP VEHICLE STEERING SYSTEM

(30) Priorité: 06.06.2006 FR 0604998
(43) Date de publication de la demande: 18.02.2009
(73) Titulaire: Renault s.a.s., 92100 Boulogne Billancourt (FR)
(72) Inventeur: CHAUVELIER, Eric, 78320 Le Mesnil Saint Denis (FR)
(86) Numéro de dépôt international: PCT/FR2007/051382
(87) Numéro de publication internationale: WO 2007/141456

(56) Documents cités:
- EP-A1- 0 850 818
- EP-A2- 1 621 445
- EP-A2- 1 630 936
- WO-A-87/02632
- DE-A1- 10 050 377
- DE-A1- 10 317 581
- US-A1- 2004 148 075

## Description

L'invention concerne un procédé de commande de l'alimentation électrique d'un moteur entraînant une pompe hydraulique de direction assistée de véhicule automobile. L'invention concerne encore un dispositif de commande de l'alimentation électrique d'un moteur entraînant une pompe hydraulique de direction assistée de véhicule automobile et un système de direction assistée comprenant un tel dispositif de commande.

Historiquement, les systèmes de direction des véhicules automobiles fonctionnaient exclusivement grâce aux efforts qu'exerçait le conducteur sur un volant de direction. Ces efforts sur le volant étaient transmis à un arbre appelé « colonne de direction » et muni à son extrémité d'un pignon engrenant avec une crémaillère. La rotation de cette colonne entraînait donc un mouvement de translation de la crémaillère. Un système de timonerie à chaque extrémité de la crémaillère permettait d'orienter des roues du véhicule automobile en réponse à ce déplacement de la crémaillère.

Il a ensuite été imaginé, en conservant la structure mécanique de base du système de direction décrit précédemment, d'ajouter des moyens hydrauliques d'assistance à la manoeuvre du volant de direction pour améliorer l'agrément de conduite. Pour ce faire, on a ajouté un circuit hydraulique comprenant une pompe alimentant un actionneur. La pompe était entraînée, via une courroie, par le groupe motopropulseur du véhicule et l'actionneur permettait d'exercer des efforts mécaniques sur le système de direction en fonction des actions exercées par le conducteur sur le volant. Cette solution présentait des inconvénients. D'abord, la transmission par courroie était à l'origine de défaillances liées à l'usure. De plus, cette transmission nécessitait beaucoup d'énergie. En effet, même pendant les phases de fonctionnement du véhicule où l'assistance de direction n'était pas nécessaire, la pompe était entraînée par la courroie. Enfin, l'utilisation d'une transmission par courroie crée de nombreuses contraintes de positionnement des organes les uns par rapport aux autres dans un environnement où l'on a de plus en plus cherché à optimiser la compacité des architectures.

Pour remédier à ces inconvénients, il a été imaginé un système de direction assistée dans lequel la pompe hydraulique est entraînée par un moteur électrique. La demande de brevet EP 0 850 818 décrit par exemple un tel système d'assistance.

Cependant cette solution pose, elle aussi, un certain nombre de problèmes. Il arrive en effet que des défaillances privent momentanément le moteur électrique d'alimentation. Ceci peut être notamment dû à une défaillance du réseau électrique de bord. Dans une telle situation, le véhicule est dépourvu d'assistance de direction. Les efforts que doit exercer le conducteur sur le volant pour diriger les roues du véhicule sont alors particulièrement importants.

Dès que l'énergie nécessaire au fonctionnement du moteur électrique entraînant la pompe est disponible sur le réseau de bord, on commande immédiatement la rotation du moteur à son régime de consigne. Cette remise en route brutale du moteur n'est pas sans conséquence : elle provoque une brusque diminution de l'effort résistant auquel est confronté le conducteur pour effectuer une manoeuvre. Si cet événement, surprenant pour le conducteur, est sans danger à basse vitesse, il peut l'être à grande vitesse lorsque le véhicule négocie une courbe. En effet, la brusque diminution de l'effort résistant est de nature à créer un à-coup dans le système de direction et à engendrer, en conséquence, une modification substantielle de la trajectoire du véhicule. Même s'il est sans danger à faible vitesse, l'événement est surprenant pour le conducteur et de nature à faire douter l'utilisateur de la qualité et de la fiabilité de son véhicule. Un tel événement doit par conséquent être évité.

En revanche, si l'on n'alimente pas de nouveau le moteur électrique entraînant la pompe hydraulique lorsque le réseau de bord est de nouveau opérationnel, il n'y a plus d'assistance de direction et les efforts que doit exercer le conducteur sur le volant pour diriger les roues du véhicule demeurent alors particulièrement importants. Le véhicule peut alors devenir difficile, voire impossible, à manoeuvrer dans certaines conditions de roulage. Ce problème peut être considéré comme étant une panne immobilisante. Dans ce cas, le véhicule doit être dépanné sur place. Ceci est également pour l'utilisateur un événement perturbant de nature à lui faire perdre la confiance qu'il a dans la qualité et dans la fiabilité de son véhicule. En outre, cette panne est coûteuse pour le constructeur du véhicule si celui-ci est toujours sous garantie ou pour le client s'il ne l'est plus. Il apparaît en conséquence que le non-rétablissement de l'assistance de direction après une défaillance doit être évité.

Afin de gérer au mieux ce dilemme, il est connu, dans certains véhicules commercialisés, de conditionner le rétablissement de l'assistance de direction du véhicule aux conditions de roulage de celui-ci, notamment à la vitesse. Ainsi, en deçà d'une vitesse seuil, l'assistance de direction est rétablie et, au-delà de cette vitesse seuil, l'assistance de direction n'est pas rétablie brutalement. Cette solution peut également être source d'interrogations et de doute de l'utilisateur quant à la qualité et la fiabilité de son véhicule : celui-ci présentant alors selon les conditions de roulage des comportements complètement différents.
Ainsi la publication EP-A1 1621445 divulgue un dispositif d'assistance de direction électrique comportant un moyen de contrôle de l'assistance de direction adapté à contrôler une étape de rétablissement de l'assistance de direction comprenant une étape de restauration rapide jusqu'à un premier seuil de taux d'assistance suivi d'une seconde étape de restauration progressive jusqu'à un second seuil de taux d'assistance.

Le but de l'invention est de fournir un procédé de commande de direction assistée obviant aux inconvénients cités précédemment et améliorant les procédés de commande connus de l'art antérieur. En particulier, l'invention propose un procédé de commande de direction assistée dont l'exécution ne surprend pas l'utilisateur du véhicule. Le but de l'invention est encore de fournir un dispositif de commande de direction assistée permettant de mettre en oeuvre un tel procédé.

A cette fin, le procédé de commande selon l'invention est caractérisé en ce que, suite à une défaillance d'alimentation électrique du moteur, en fonction de l'état du véhicule automobile, on pilote une étape de rétablissement progressif de l'alimentation électrique du moteur.

Le rétablissement progressif de l'alimentation peut être réalisé par une évolution de la tension d'alimentation du moteur selon une rampe temporelle.

La progressivité du rétablissement progressif de l'alimentation peut être fonction d'au moins un paramètre cinématique d'un organe du véhicule automobile.

La progressivité du rétablissement de l'alimentation peut être fonction de la position du volant de direction.

Pendant l'étape de rétablissement progressif de la tension d'alimentation, le taux de variation du pourcentage d'assistance de direction peut valoir au moins 33% par seconde.

Pendant l'étape de rétablissement progressif de la tension d'alimentation, le taux de variation du pourcentage d'assistance de direction peut valoir au plus 50% par seconde.

Pendant l'étape de rétablissement progressif de la tension d'alimentation, on peut piloter le couple résistant à la manoeuvre du volant de direction en fonction de la tension et du courant fournis au moteur.

Le dispositif de commande selon l'invention est caractérisé en ce qu'il comprend des moyens matériels et logiciels pour mettre en oeuvre le dispositif de commande défini précédemment.

Les moyens matériels peuvent comprendre une unité logique de traitement et un moyen de régulation de la tension d'alimentation piloté par l'unité logique de traitement.

Le système de direction assistée selon l'invention comprend un dispositif de commande défini précédemment.

Le dessin annexé représente, à titre d'exemple, un mode d'exécution d'un procédé de commande de direction assistée selon l'invention et un mode de réalisation d'un dispositif de commande de direction assistée selon l'invention.
La figure 1 est une vue schématique d'un véhicule automobile comprenant un système de direction muni d'un dispositif de commande d'assistance selon l'invention.
La figure 2 est un schéma électrique de détail d'un dispositif de commande d'assistance selon l'invention.
La figure 4 est un graphique temporel explicitant les variations des principaux paramètres déterminant l'état du système de direction assistée lors de la mise en oeuvre du procédé de commande selon l'invention.

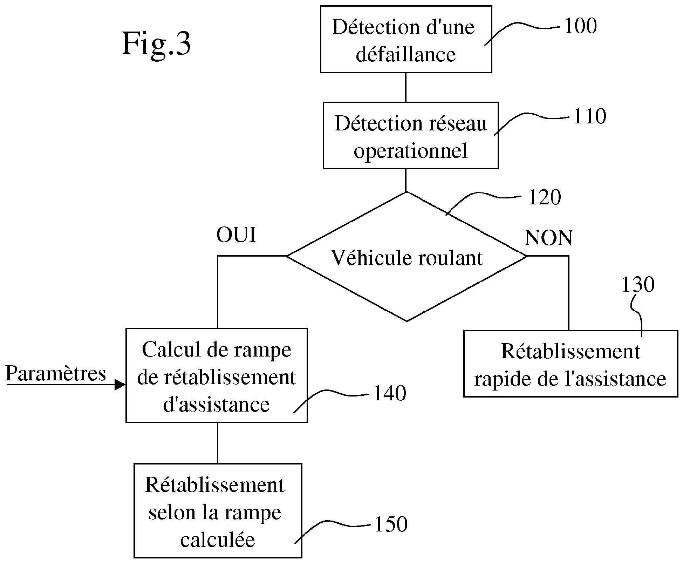

La figure 3 est un ordinogramme représentant un mode d'exécution du procédé de commande selon l'invention.

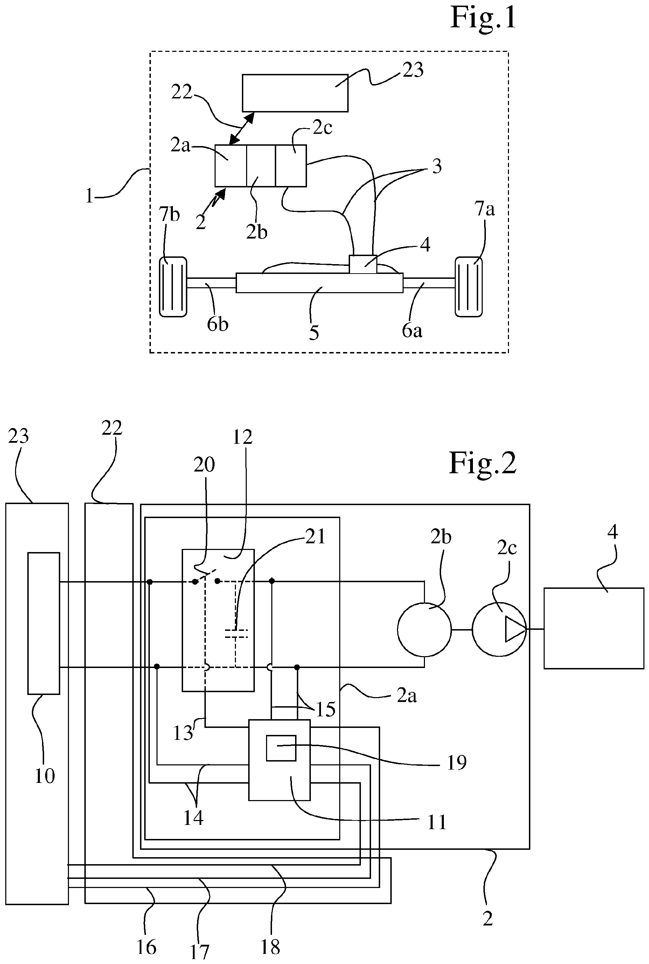

Le véhicule automobile 1 représenté à la figure 1 comprend un système de direction muni de moyens d'assistance. Le système de direction comprend un volant de direction (non représenté) solidaire d'une colonne de direction (non représentée) comprenant, à son extrémité, une roue dentée (non représentée) engrenant avec une crémaillère 5. Cette crémaillère comprend à chacune de ses extrémités des systèmes de timonerie 6a et 6b par l'intermédiaire desquels elle agit par son déplacement sur l'orientation de roues de direction 7a et 7b du véhicule. Les moyens d'assistance comprennent un groupe électro-pompe 2 alimentant en fluide hydraulique sous pression par l'intermédiaire de conduites 3 un actionneur hydraulique 4 agissant sur la crémaillère 5. L'alimentation de l'actionneur et, par conséquent, ses actions sur la direction est commandée par les manoeuvres de l'utilisateur du véhicule automobile sur le volant de direction.

Le groupe électro-pompe 2 comprend un dispositif 2a de commande électrique de l'alimentation d'un moteur électrique 2b entraînant une pompe hydraulique 2c, la sortie de cette pompe étant reliée aux conduites 3. Le groupe électro-pompe est en outre relié via un bus 22 d'alimentation électrique et d'information à un circuit électrique 23 de bord du véhicule automobile.

Le groupe électro-pompe 2 et notamment le dispositif 2a de commande électrique de l'alimentation du moteur sont décrits en détail en référence à la figure 2. Le dispositif 2a de commande électrique de l'alimentation du moteur comprend un moyen de régulation de la tension tel qu'un convertisseur de tension continu-continu 12 et une unité logique de traitement 11. Le convertisseur peut par exemple être de type « hacheur » et comprendre un interrupteur 20 commandé en fréquence et un condensateur 21 de lissage de sa tension de sortie. L'entrée de ce convertisseur est reliée à la batterie du véhicule automobile via le bus 22. La sortie de ce convertisseur alimente en énergie électrique le moteur 2b. Ainsi, en faisant varier le rapport de conversion du convertisseur, on agit sur sa tension de sortie et sur la vitesse de rotation de l'arbre du moteur 2b.

L'unité logique de traitement 11 est par exemple un microcontrôleur et comprend une mémoire 19. Des entrées de cette unité logique de traitement sont reliées via des lignes 14 aux conducteurs d'entrée du convertisseur et via des lignes 15 aux conducteurs de sortie du convertisseur afin de pouvoir déterminer les tensions d'entrée et de sortie du convertisseur. Des entrées de l'unité logique de traitement sont également reliées via des lignes 16, 17, 18 au circuit électrique 23 de bord du véhicule automobile. Elles permettent de recueillir des informations concernant l'état du véhicule automobile, notamment sa vitesse, la vitesse de manoeuvre du volant et la position du volant. Une sortie de l'unité logique de traitement est reliée au convertisseur de tension via une ligne 13 pour piloter son rapport de conversion. Dans le cas où le convertisseur est un convertisseur à interrupteur commandé en fréquence, cette ligne 13 peut directement commander les commutations de l'interrupteur. La mémoire 19 contient des données et des programmes logiciels permettant de déterminer les informations de sortie de l'unité logique de traitement émise sur la ligne 13 en fonction des informations d'entrée de l'unité logique de traitement reçues sur les lignes 14, 15, 16 et 17.

Un mode d'exécution du procédé de commande selon l'invention est décrit ci-après en référence à la figure 3.

Dans une étape 100, on détecte une défaillance du réseau de bord du véhicule automobile. Cette défaillance peut être une sous-tension ou une surtension du réseau de bord, une coupure d'alimentation ou être liée à une remise à zéro d'un calculateur. Elle peut être détectée via les lignes attaquant les entrées de l'unité logique de traitement.

Dans une étape 110, on détecte que cette défaillance est temporaire. En effet, à cette étape, on détecte que le réseau de bord est de nouveau opérationnel et est alors en mesure de fournir l'énergie nécessaire au fonctionnement des moyens d'assistance de la direction.

Dès lors, l'assistance de direction peut être rétablie. Cette assistance est donc rétablie au cours des étapes suivantes selon une procédure particulière permettant d'éviter les inconvénients évoqués plus haut.

Dans une étape de test 120, on détermine si le véhicule automobile roule ou s'il est à l'arrêt pour déterminer de quelle manière l'on va rétablir l'assistance de direction. Alternativement, on peut dans cette étape comparer la vitesse du véhicule à une valeur seuil de vitesse. Dans cette étape, on peut encore analyser d'autres informations, notamment la position du volant.

Si le véhicule automobile est à l'arrêt (ou si sa vitesse est inférieure à la valeur de vitesse seuil), on rétablit, dans une étape 130, brutalement l'assistance de direction. En effet, ce rétablissement ne crée pas de situation de danger. On applique, en conséquence, brutalement, dans l'étape 130, une tension de consigne d'alimentation aux bornes du moteur 2b de manière à ce que celui-ci atteigne rapidement son régime de fonctionnement de consigne et fournisse l'énergie mécanique nécessaire à la pleine assistance de la direction. Alternativement, la tension d'alimentation pourrait être rétablie selon une rampe relativement raide (par exemple la totalité de l'assistance de direction pourrait être retrouvée en 0,1 à 0,2 seconde selon l'inertie du groupe électro-pompe) permettant d'arriver à un compromis entre le temps de rétablissement de la pleine assistance et le pic de consommation électrique sur le réseau de bord du véhicule lié au rétablissement de l'assistance.

Si le véhicule automobile n'est pas à l'arrêt (ou si sa vitesse est supérieure à la valeur de vitesse seuil), on rétablit progressivement l'assistance de direction.

Pour ce faire dans une étape 140, on calcule la pente d'une rampe d'évolution de la tension d'alimentation du moteur en fonction du temps. Il s'agit de ne pas rétablir l'assistance de direction de manière trop brutale pour ne pas surprendre l'utilisateur. En conséquence, on calcule la pente de cette rampe en fonction de différents paramètres d'état du véhicule. Cette pente détermine également le délai T séparant l'instant où l'assistance de direction commence à être remise et l'instant où le véhicule a retrouvé la pleine assistance de direction. Les principaux paramètres utilisés pour calculer cette pente ou ce délai sont le régime de consigne du moteur, la vitesse du véhicule, la vitesse du volant et la position du volant. Cependant, dans une variante simplifiée distincte de l'invention, seule la vitesse du véhicule ou seuls certains paramètres peuvent suffire au calcul. La position du volant de direction peut également constituer une information très importante dans la mesure où si le véhicule circule à vitesse élevée mais si sa trajectoire est rectiligne, il n'est pas dangereux de rétablir l'assistance de direction de façon moins progressive.

Dans une étape 150, le moteur électrique est alimenté par un signal de tension comprenant la rampe prédéfinie pour rétablir progressivement la pleine assistance de direction. Par exemple, le taux de variation de la rampe de tension peut être compris entre 0,75 volts par seconde et 2 volts par seconde. Dans un autre exemple, la rampe de tension est telle que le taux de variation du pourcentage d'assistance de direction est compris entre 33% par seconde et 50% par seconde.

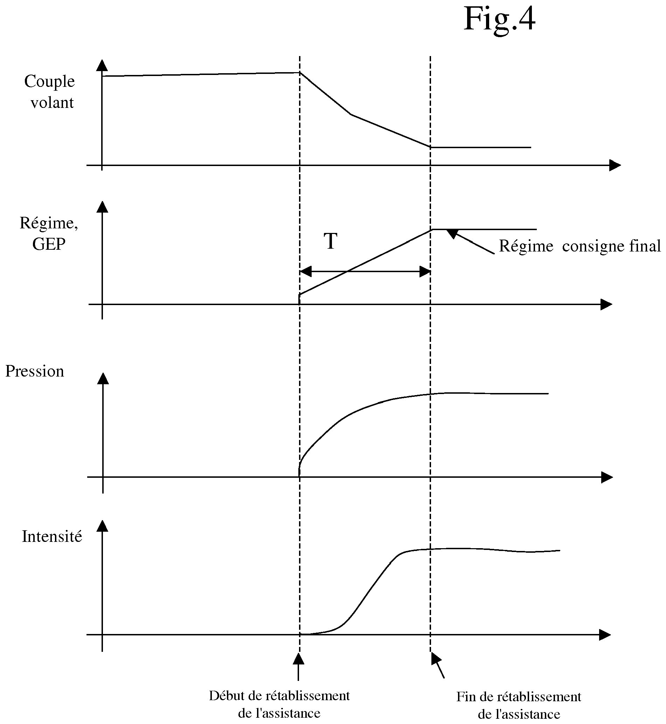

Les principaux paramètres représentatifs de l'état de la direction évoluent alors comme indiqué à la figure 4. Entre le début du rétablissement de l'assistance et la fin du rétablissement de l'assistance, l'intensité consommée par le moteur augmente progressivement selon une courbe à dérivée continue alors que la vitesse de rotation du moteur et, donc, celle de la pompe augmente sensiblement linéairement. Ceci a pour conséquence de faire augmenter la pression dans le circuit hydraulique d'abord brutalement puis plus progressivement. Il en résulte une diminution quasi-linéaire du couple résistant aux manoeuvres du volant jusqu'à un minimum lorsque la pleine assistance est retrouvée.

Grâce à une telle évolution de l'effort résistant, le conducteur n'est pas surpris. Même à haute vitesse en virage, celui-ci ressent une diminution progressive de l'effort résistant. Il diminue alors progressivement l'effort qu'il applique au volant pour maintenir la trajectoire du véhicule.

De plus, le rétablissement progressif de l'assistance permet de ne pas engendrer de pic de consommation électrique trop important sur le réseau qui serait susceptible d'entraîner des chutes de tension de nature à nuire au bon fonctionnement d'autres équipements du véhicule.

Dans une variante du procédé de commande décrit ci-dessus, le courant électrique absorbé par le moteur peut de plus être limité. A tension donnée, le courant étant proportionnel à la puissance hydraulique en sortie de pompe, on peut en utilisant des modèles contrôler la variation des efforts résistants sur le volant de direction. La vitesse de rotation du moteur est alors déduite du couple résistant désiré, ce dernier étant fonction de la tension d'alimentation du moteur, du courant d'alimentation du moteur et de la vitesse du volant.

Le rétablissement progressif de l'assistance de direction permet d'éviter des déformations des conduites de fluide hydraulique et des instabilités de l'assistance qui en résultent.

Dans le cas de situations d'évitement qui pourraient être détectées par l'électronique du véhicule, le rétablissement brutal de l'assistance est privilégié.

Le procédé de commande décrit plus haut implique des phases de fonctionnement de la pompe à des régimes de faibles vitesses néfastes pour sa durée de vie. Cependant, ces phases étant transitoires et peu fréquentes, elles ont un impact très négligeable sur sa durée de vie.

## Revendications

1. Procédé de commande de l'alimentation électrique d'un moteur (2b) entraînant une pompe hydraulique (2c) de direction assistée de véhicule automobile (1) comportant à travers le rétablissement progressif de l'alimentation électrique du moteur une étape de rétablissement progressif de l'assistance de direction consécutive à une défaillance d'alimentation électrique du moteur, **caractérisé en ce que** ladite étape de rétablissement progressif est effectuée, si la vitesse du véhicule est non nulle ou supérieure à une valeur de seuil selon des paramètres comprenant la position et la vitesse du volant.

2. Procédé de commande selon la revendication 1, **caractérisé en ce que** le rétablissement progressif est réalisé par une évolution de la tension d'alimentation du moteur selon une rampe temporelle.

3. Procédé de commande selon l'une des revendications précédentes, **caractérisé en ce que** la progressivité du rétablissement progressif est fonction d'au moins un paramètre cinématique d'un organe du véhicule automobile.

4. Procédé de commande selon l'une des revendications précédentes, **caractérisé en ce que**, pendant l'étape de rétablissement progressif, le taux de variation du pourcentage d'assistance de direction par rapport à la pleine assistance vaut au moins 33% par seconde.

5. Procédé de commande selon l'une des revendications précédentes, **caractérisé en ce que**, pendant l'étape de rétablissement progressif, le taux de variation du pourcentage d'assistance de direction par rapport à la pleine assistance vaut au plus 50% par seconde.

6. Procédé de commande selon l'une des revendications précédentes, **caractérisé en ce que**, pendant l'étape de rétablissement progressif, on pilote le couple résistant à la manoeuvre du volant de direction en fonction de la tension et du courant fournis au moteur.

7. Dispositif (2a) de commande de l'alimentation électrique d'un moteur (2b) entraînant une pompe hydraulique de direction assistée de véhicule automobile (1), **caractérisé en ce qu'**il comprend des moyens matériels (11, 12, 19) et logiciels mettant en oeuvre le procédé de commande selon l'une des revendications précédentes.

8. Dispositif de commande selon la revendication 7, **caractérisé en ce que** les moyens matériels comprennent une unité logique de traitement (11) et un moyen (12) de régulation de la tension d'alimentation piloté par l'unité logique de traitement.

9. Système de direction assistée comprenant un dispositif de commande selon la revendication 7 ou 8.

## Patentansprüche

1. Verfahren zur Steuerung der Stromversorgung eines Motors (2b), der eine Hydraulikpumpe (2c) einer Lenkhilfe eines Kraftfahrzeugs (1) antreibt, das über die progressive Wiederherstellung der Stromversorgung des Motors einen Schritt der progressiven Wiederherstellung der Lenkhilfe nach einem Stromausfall des Motors aufweist, **dadurch gekennzeichnet, dass** der Schritt der progressiven Wiederherstellung durchgeführt wird, wenn die Geschwindigkeit des Fahrzeugs ungleich Null oder höher als ein Schwellwert gemäß Parametern ist, die die Stellung und die Geschwindigkeit des Lenkrads enthalten.

2. Steuerverfahren nach Anspruch 1, **dadurch gekennzeichnet, dass** die progressive Wiederherstellung durch eine Entwicklung der Speisespannung des Motors gemäß einer Zeitrampe durchgeführt wird.

3. Steuerverfahren nach einem der vorhergehenden Ansprüche, **dadurch gekennzeichnet, dass** die Progressivität der progressiven Wiederherstellung von mindestens einem kinematischen Parameter eines Organs des Kraftfahrzeugs abhängt.

4. Steuerverfahren nach einem der vorhergehenden Ansprüche, **dadurch gekennzeichnet, dass** während des Schritts der progressiven Wiederherstellung der Änderungsgrad des Lenkhilfeprozentsatzes bezüglich der vollen Hilfe mindestens 33% pro Sekunde beträgt.

5. Steuerverfahren nach einem der vorhergehenden Ansprüche, **dadurch gekennzeichnet, dass** während des Schritts der progressiven Wiederherstellung der Änderungsgrad des Lenkhilfeprozentsatzes bezüglich der vollen Hilfe höchstens 50% pro Sekunde beträgt.

6. Steuerverfahren nach einem der vorhergehenden Ansprüche, **dadurch gekennzeichnet, dass** während des Schritts der progressiven Wiederherstellung das Widerstandsmoment zur Betätigung des Lenkrads abhängig von der/dem an den Motor gelieferten Spannung und Strom gesteuert wird.

7. Vorrichtung (2a) zur Steuerung der Stromversorgung eines Motors (2b), der eine Hydraulikpumpe einer Lenkhilfe eines Kraftfahrzeugs (1) antreibt, **dadurch gekennzeichnet, dass** sie Hardware- (11, 12, 19) und Softwareeinrichtungen enthält, die das Steuerverfahren nach einem der vorhergehenden Ansprüche anwenden.

8. Steuervorrichtung nach Anspruch 7, **dadurch gekennzeichnet, dass** die Hardwareeinrichtungen eine logische Verarbeitungseinheit (11) und eine Einrichtung (12) zur Regelung der Speisespannung enthalten, die von der logischen Verarbeitungseinheit gesteuert wird.

9. Lenkhilfesystem, das eine Steuervorrichtung nach Anspruch 7 oder 8 enthält.

## Claims

1. Method of controlling the supply of electricity to a motor (2b) that drives a hydraulic pump (2c) of the power-assisted steering of a motor vehicle (1), comprising, by gradually re-establishing the supply of electricity to the motor, a step of gradually re-establishing the power-assisted steering following a fault with the supply of electricity to the motor, **characterized in that** the said step of gradually re-establishing the supply is performed, if the speed of the vehicle is non-zero or above a threshold value, according to parameters comprising the position and speed of the steering wheel.

2. Control method according to Claim 1, **characterized in that** the supply is re-established gradually by altering the motor supply voltage in accordance with a time-dependent ramp.

3. Control method according to either of the preceding claims, **characterized in that** the gradualness with which the supply is re-established gradually is dependent on at least one dynamic parameter of a component of the motor vehicle.

4. Control method according to one of the preceding claims, **characterized in that**, during the step in which the supply is re-established gradually, the rate at which the percentage of power-assisted steering compared with full power-assisted steering varies is at least 33% per second.

5. Control method according to one of the preceding claims, **characterized in that**, during the step in which the supply is gradually re-established, the rate at which the percentage of power-assisted steering compared with full power-assisted steering varies is at most 50% per second.

6. Control method according to one of the preceding claims, **characterized in that**, during the step in which the supply is gradually re-established, the torque resisting the turning of the steering wheel is made dependent upon the voltage and current supplied to the motor.

7. Device (2a) for controlling the supply of electricity to a motor (2b) driving a hydraulic pump of a power-assisted steering of a motor vehicle (1), **characterized in that** it comprises hardware (11, 12, 19) and software means implementing the control method according to one of the preceding claims.

8. Control device according to Claim 7, **characterized in that** the hardware means comprises a logic processing unit (11) and a means (12) of regulating the supply voltage which is controlled by the logic processing unit.

9. Power-assisted steering system comprising a control device according to Claim 7 or 8.
